(19) Europäisches Patentamt
European Patent Office
Office européen des brevets

(11) **EP 2 548 073 B1**

(12) **EUROPÄISCHE PATENTSCHRIFT**

(45) Veröffentlichungstag und Bekanntmachung des Hinweises auf die Patenterteilung:
**04.07.2018 Patentblatt 2018/27**

(21) Anmeldenummer: **11709636.2**

(22) Anmeldetag: **08.03.2011**

(51) Int Cl.:
***G02B 27/34*** *(2006.01)*

(86) Internationale Anmeldenummer:
**PCT/EP2011/001169**

(87) Internationale Veröffentlichungsnummer:
**WO 2011/113547 (22.09.2011 Gazette 2011/38)**

(54) **VORRICHTUNG ZUR BELEUCHTUNG EINER MARKIERUNG**

DEVICE FOR ILLUMINATING A MARKING

DISPOSITIF POUR L'ÉCLAIRAGE D'UN MARQUAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.03.2010 DE 102010012056**

(43) Veröffentlichungstag der Anmeldung:
**23.01.2013 Patentblatt 2013/04**

(73) Patentinhaber: **Leica Camera AG
35578 Wetzlar (DE)**

(72) Erfinder:
• **KAMMANS, Sigrun**
**35745 Herborn (DE)**
• **MAYER, Udo**
**35644 Hohenahr (DE)**

(74) Vertreter: **Stamer, Jan**
**PATENTANWALTSKANZLEI STAMER
Postfach 2604
35536 Wetzlar (DE)**

(56) Entgegenhaltungen:
**EP-A1- 1 653 271    EP-A2- 0 886 163
DE-A1-102007 037 389**

**Beschreibung**

Die Erfindung betrifft eine Vorrichtung zur Beleuchtung einer auf einer ebenen transparenten Trägerscheibe als Beugungsstruktur aufgebrachten Markierung.

Aus EP 0 886 163 B1 ist eine optische Einrichtung mit einer beleuchteten Strichplatte bekannt. Die Strichplatte besteht aus einer ebenen transparenten Trägerscheibe, auf die eine als Beugungsstruktur ausgebildete Markierung aufgebracht ist. Strichplatten werden insbesondere in Zielfernrohre zur Zielmarkierung eingesetzt. Die Markierung liegt in einer Zwischenbildebene des Zielfernrohres. Die Markierung kann in Lichtrichtung des Zielfernrohres auf der Vorder- oder Rückseite der Trägerscheibe aufgebracht sein.

Die Beleuchtung der Markierung erfolgt durch eine seitlich zur Trägerscheibe angeordnete Lichtquelle durch die Randfläche der Trägerscheibe hindurch. Durch die Wirkung der Beugungsstruktur werden die Beleuchtungsstrahlen in der ersten Beugungsordnung in die Richtung der optischen Achse des Zielfernrohres zum Beobachter gelenkt, so dass die Markierung für den Beobachter im Zwischenbild sichtbar wird.

Aus EP 1 653 271 B1 ist eine Beleuchtungsvorrichtung bekannt, mit der die Beleuchtung der Beugungsstruktur der bekannten Strichplatte verbessert wird, so dass eine größere Helligkeit und ein höherer Kontrast der Markierung im Zwischenbild erreicht werden. Die Beleuchtungsvorrichtung besteht aus einem seitlich neben der Trägerscheibe der Markierung angeordneten Spiegel mit einer Spiegelfläche, die derart gekrümmt ist, dass der Spiegel zwei Brennpunkte aufweist. Im Bereich des einen Brennpunktes befindet sich die Lichtquelle. Die vom Spiegel reflektierten Lichtstrahlen laufen zu der Markierung hin zusammen, die im zweiten Brennpunkt des Spiegels liegt. Je nach Lage der Markierung auf der in Lichtrichtung vorderen oder hinteren Fläche der Trägerscheibe werden die Lichtstrahlen direkt oder nach einer oder mehreren Totalreflektionen an einer inneren Fläche der Trägerscheibe auf die Markierung gelenkt.

Die Spiegelfläche soll vorzugsweise an der Rückseite eines von der Lichtquelle von vorne angestrahlten Spiegelelementes angeordnet sein. Als Lichtquelle wird vorzugsweise eine Leuchtdiode vorgesehen. Das Spiegelelement kann insbesondere durch Kleben am Rand der Trägerscheibe befestigt sein. Die Leuchtdiode kann mit der Vorderseite des Spiegelelementes verbunden sein. Weiterer Stand der Technik ist aus der Druckschrift DE 10 2007 037 389 A1 bekannt. Der Erfindung lag die Aufgabe zugrunde, die Beleuchtung der als Beugungsgitter ausgebildeten Markierung insbesondere durch eine Leuchtdiode so zu optimieren, dass nahezu die gesamte von der Leuchtdiode abgestrahlte Lichtenergie erfasst und auf die Markierung gelenkt wird.

Diese Aufgabe wird bei einer Vorrichtung der eingangs genannten Art erfindungsgemäß durch die Merkmale des Anspruchs 1 gelöst. Vorteilhafte Weiterbildungen ergeben sich aus den Merkmalen der Unteransprüche.

Eine wesentliche Eigenschaft der an sich bekannten Strichplatte besteht darin, die an der Markierung gebeugten Lichtstrahlen in die optische Achse des Fernrohres zum Beobachter lenken zu können. Da die Beugung wellenlängenabhängig ist, können die Randbedingungen für die gewünschte Beugungsrichtung durch die Verwendung einer schmalbandigen Leuchtdiode optimal erfüllt werden.

Es ist bekannt, dass Leuchtdioden eine in der Fläche und Tiefe unsymmetrische Abstrahlcharakteristik aufweisen. Von der Emission aus einem Brennpunkt heraus kann daher nicht ausgegangen werden. Eine der Leuchtdiode vorgeschaltete Kollimationsoptik kann so ausgelegt werden, dass sie die aus unterschiedlichen Richtungen und Tiefen aus der Leuchtdiode austretenden Lichtstrahlen zu einem symmetrischen und homogenen Lichtstrahlenbündel vereinigt. Die Kollimationsoptik kann insbesondere aus asphärischen oder anamorphotischen Linsen, einer GRIN-Linse oder einem DOE bestehen. Die Kollimationsoptik kann mit der Leuchtdiode zu einem einheitlichen Bauteil zusammengefügt sein.

Die Verwendung eines einfachen Prismas oder einer an die Seitenrandfläche der Trägerscheibe angeschliffenen schrägen Fläche zur Einkopplung der Beleuchtungsstrahlen in die Trägerplatte hinein vereinfacht die optische Justierung der Einstrahlungsrichtung und Ausrichtung des Einkoppelelements zur Markierung. Planoptische Elemente und Flächen können außerdem mit größerer Präzision hergestellt werden als gekrümmte Spiegelflächen.

Bei vorgegebener Gitterkonstante der Beugungsstruktur ist die Beugung in die Beobachtungsrichtung von der Wellenlänge der Lichtstrahlen und dem Anstrahlwinkel der Beleuchtungsstrahlen auf die Beugungsstruktur abhängig. Der Anstrahlwinkel kann durch die Neigung der Reflexionsfläche an einem Prisma oder die Neigung einer angeschliffenen schrägen Randfläche an der Trägerscheibe in einfacher Weise beeinflusst werden. Das eröffnet die Möglichkeit, für Leuchtdioden mit unterschiedlicher Emissionswellenlänge über die Neigung der Einkoppelfläche den geeigneten Anstrahlwinkel einzustellen und damit eine unterschiedliche farbliche Darstellung der Markierung zu erzeugen. Bei einer Beugungsstruktur mit zueinander parallelen Beugungselementen können am Randbereich der Trägerscheibe zwei diametral zueinander und senkrecht zu den Beugungsstrukturen liegende Einkoppelstellen für die Beleuchtungsstrahlen angeordnet sein, die wahlweise einschaltbar sind.

In der Zeichnung sind Ausführungsbeispiele für die erfindungsgemäße Beleuchtungsvorrichtung schematisch dargestellt. Anhand der Figuren werden diese näher beschrieben. Dabei zeigen

Fig.1     ein erstes Ausführungsbeispiel mit einem Einkoppelprisma,

Fig.2    ein zweites Ausführungsbeispiel mit anderem Einkoppelprisma,

Fig.3    eine Aufsicht auf eine Trägerscheibe mit zwei Einkoppelbereichen,

Fig.4    ein über einen ersten Einkoppelbereich eingestrahltes Strahlenbündel und

Fig.5    ein über einen zweiten Einkoppelbereich eingestrahltes Strahlenbündel.

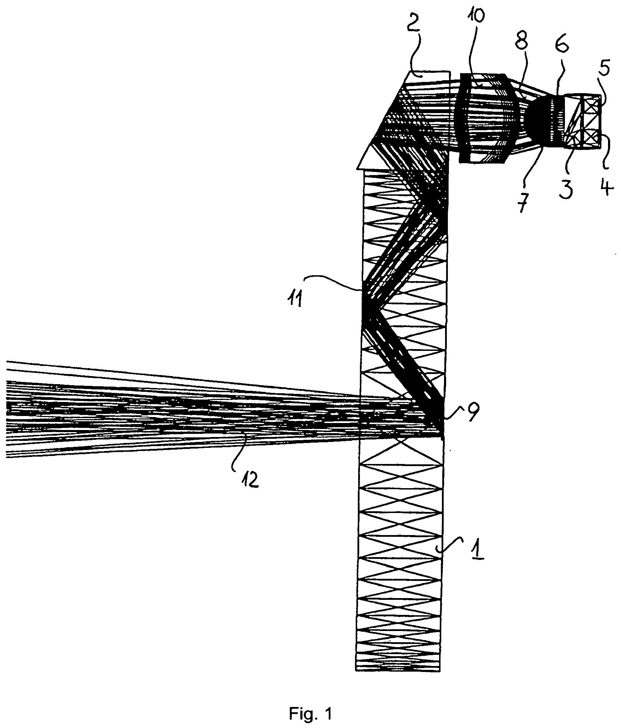

Das in Fig. 1 dargestellte erste Ausführungsbeispiel zeigt eine Trägerscheibe 1 in der Seitenansicht. Die aufgebrachte rautenförmige Struktur soll die aus der Zeichenebene vorstehende Ausdehnung der kreisförmigen Trägerscheibe 1 deutlich machen. Auf eine Seitenrandfläche der Trägerscheibe 1 ist ein Einkoppelprisma 2 aufgesetzt. Das Einkoppelprisma 2 ist ein Rechteckprisma, bei dem eine Kathetenfläche auf die Seitenrandfläche aufgekittet ist und die andere Kathetenfläche als Strahleneintrittsfläche genutzt ist. An der Basisfläche werden die Beleuchtungsstrahlen in die Trägerscheibe 1 hinein reflektiert. Die Reflektion kann je nach Neigungswinkel der Basisfläche über Totalreflektion oder über Verspiegelung der Basisfläche erfolgen.

Als Lichtquelle ist eine LED 3 dargestellt. Neben den elektrischen Kontakten 4, 5 enthält die LED 3 einen Halbleiterkörper 6 als schmalbandigen Strahler mit einer transparenten Abdeckung 7. Die Abdeckung 7 ist üblicherweise als konvexe Linse ausgebildet, die einen für die LED typischen Strahlungskegel 8 erzeugt. Insgesamt ist der Darstellung zu entnehmen, dass die LED 3 als Leuchtkörper mit dreidimensionaler Ausdehnung zu behandeln ist. Für eine effektive und gleichmäßige Ausleuchtung einer im Flächenbereich 9 auf der Trägerscheibe 1 aufgebrachten beugenden Markierung ist es erforderlich, den Strahlenkegel 8 möglichst vollständig zu erfassen und die in dem Strahlungskegel 8 enthaltenen Strahlen in ein symmetrisches und homogenes Lichtstrahlenbündel umzuformen.

Zu diesem Zweck ist der LED 3 eine Kollimationsoptik 10 vorgeschaltet. Die Kollimationsoptik 10 ist hier als asphärische Linse dargestellt, wobei durch die nebeneinander liegenden Konturlinien der Lichteintritts- und Lichtaustrittsseite deutlich wird, dass die asphärische Formgebung auch in den aus der Zeichenebene heraustretenden Flächenbereichen der Linse gegeben ist. Der Querschnitt des Strahlungskegels 8 ist in der Regel oval.

Unsymmetrien im Strahlungskegel 8 können in an sich bekannter Weise auch durch eine anamorphotische Ausbildung der Kollimationsoptik 10 oder durch GRIN-Linsen oder ein diffraktives optisches Element DOE ausgeglichen werden.

Das von der Kollimationsoptik 10 erzeugte Strahlenbündel hat über den gesamten Querschnitt eine relativ homogene Lichtverteilung wie aus der dargestellten Strahlenverteilung zu entnehmen ist. Durch die gute Bündelung der Strahlen entstehen kaum vagabundierende Strahlen, die zu einer Aufhellung der Trägerscheibe 1 und Kontrastminderung eines in der Markierungsebene entstehenden Objektbildes führen würden.

Die bildseitige Brennweite der Kollimationsoptik 10 ist so gewählt, dass die Leuchtfläche der LED 3 in den Flächenbereich 9 abgebildet wird.

Das Beleuchtungsstrahlenbündel wird dabei nach der Reflektion an der Basisfläche des Einkoppelprismas 2 noch zweimal unter dem Grenzwinkel der Totalreflektion an den inneren Flächen der Trägerscheibe reflektiert.

Der durch die Neigung der Basisfläche des Einkoppelprismas 2 vorgegebene Einstrahlungswinkel ist so gewählt, dass das Beleuchtungsstrahlenbündel 11 auf die in dem Flächenbereich 9 liegende beugende Struktur der Markierung unter einem Winkel auftrifft, bei dem die Beleuchtungsstrahlen in die 1. Beugungsordnung der Struktur gebeugt werden. Die Richtung der 1. Beugungsordnung des Mittelstrahls des Beleuchtungsstrahlenbündels 11 soll dabei senkrecht zur Fläche der Trägerscheibe 1 stehen, d.h. in Richtung der optischen Achse eines Beobachtungsfernrohres verlaufen. Im dargestellten Beispiel ist eine reflektierend beugende Struktur für die Markierung vorgesehen. Das gebeugte Strahlenbündel weist eine Öffnung auf, die an die Öffnung eines nicht dargestellten Okulars angepasst ist.

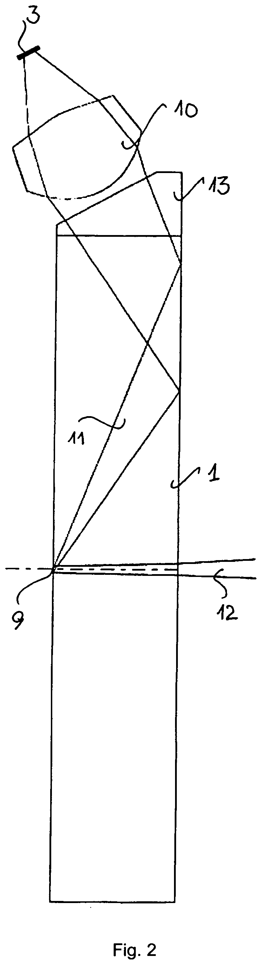

Fig. 2 zeigt eine weitere Ausführungsform, bei der das Einkoppelprisma in Form eines Keiles 13 auf die Randfläche der Trägerscheibe 1 aufgesetzt ist. Die Einstrahlung erfolgt über die Basisfläche des den Keil 19 bildenden Rechteckprismas. Selbstverständlich kann die Strahleneintrittsfläche auch direkt an die Trägerscheibe 1 als schräge Fläche angeschliffen sein. Zur Weiterleitung des Beleuchtungsstrahlenbündels innerhalb der Trägerscheibe genügt in diesem Fall eine einmalige innere Totalreflektion.

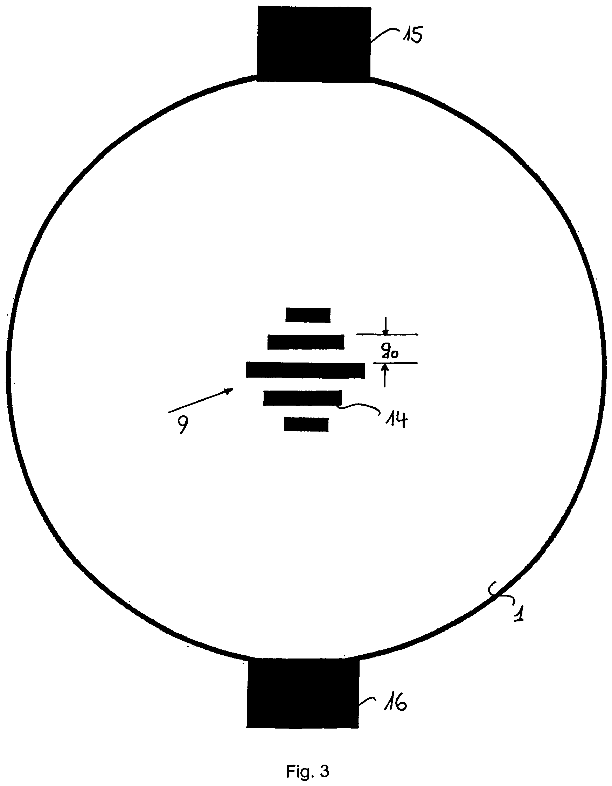

Fig. 3 zeigt in der Aufsicht eine Trägerscheibe 1 mit einer im Flächenbereich 9 liegenden Gitterstruktur 14. Der Flächenbereich 9 hat z.B. einen Durchmesser von etwa 1,6 mm und erscheint im Beugungsbild als leuchtender Punkt. An die Trägerscheibe 1 angeformt sind zwei einander diametral gegenüber liegende Einkoppelelemente 15 , 16, die jeweils ein aus Einkoppelprisma, Kollimationsoptik und LED bestehendes Beleuchtungssystem repräsentieren. Bei gleicher Gitterstruktur 14 können die Einkoppelelemente 15, 16 für unterschiedliche Wellenlängen der LED und damit für unterschiedliche Farbdarstellungen der Markierung ausgelegt sein.

Dieser Anordnung liegen die nachstehenden Gesetzmäßigkeiten für die Beugung eines Lichtstrahls an einem Gitter zugrunde, die durch die Gittergleichung beschrieben werden:

$$m \cdot \lambda = n \cdot g \cdot \sin \alpha + n' \cdot g \cdot \sin \alpha'$$

Dabei bedeuten $\alpha$ den Anstrahlwinkel, unter dem der Beleuchtungsstrahl auf die Ebene der Gitterstruktur auftrifft, $\alpha'$ den Abstrahlwinkel des gebeugten Strahls gegenüber der Senkrechten zur Gitterstruktur, g die Gitterkonstante, $\lambda$ die Wellenlänge des Beleuchtungsstrahls, n die Brechzahl des Mediums vor dem Gitter, n' die Brechzahl des Mediums in Lichtrichtung hinter dem Gitter und m die Beugungsordnung. Wenn die Gitterstruktur reflektiv ist und innerhalb der Trägerscheibe angestrahlt wird, dann ist n' = n. Wenn das Gitter transmittiv ist und innerhalb der Trägerscheibe angestrahlt wird, dann ist n' = 1.

Wenn, wie in dem vorstehenden Anwendungsbeispiel beschrieben, der Abstrahlwinkel $\alpha'$ längs der optischen Beobachtungsachse erfolgen soll, dann ist $\alpha' = 0$ und die Gittergleichung reduziert sich zu

$$m \cdot \lambda = n \cdot g \cdot \sin \alpha$$

Für die Beleuchtung einer Gitterstruktur müssen eine bestimmte Wellenlänge $\lambda_0$, eine Brechzahl n der Trägerscheibe, eine geeignete Gitterkonstante $g_0$ und ein zugehöriger Anstrahlwinkel $\alpha_0$ festgelegt werden.

Damit ist der Abstrahlwinkel $\alpha'$ eine Funktion der Wellenlänge $\lambda$, sowie der festgelegten konstanten Parameter, nämlich der Gitterkonstanten $g_0$, des Anstrahlwinkels $\alpha_0$ und der Brechzahl n der Trägerscheibe.

$$\alpha'(\lambda) = \arcsin\left(\frac{m \cdot \lambda - n \cdot g_0 \cdot \sin \alpha_0}{n \cdot g_0}\right) \text{ (reflektives Gitter)}$$

$$\alpha'(\lambda) = \arcsin\left(\frac{m \cdot \lambda - n \cdot g_0 \cdot \sin \alpha_0}{g_0}\right) \text{ (transmittives Gitter)}$$

Diese Wellenlängen-Abhängigkeit des Abstrahlwinkels $\alpha'$ ist der Grund dafür, dass eine mehrfarbige LED-Beleuchtung ausgehend von einer festen Position der LED unterschiedliche Abstrahlwinkel $\alpha'$ erzeugt. Für den Betrachter des durch die Gitterstruktur dargestellten Zielpunktes ergeben sich damit zum Teil erhebliche Abweichungen in der Parallaxe. Bei der Auswahl der LED muss daher auf eine schmalbandige Emissionscharakteristik großer Wert gelegt werden.

Soll der Abstrahlwinkel $\alpha'$ für alle Farben längs der optischen Achse OA erfolgen, d.h. $\alpha'(\lambda) = const = 0$, dann ergibt sich, dass der Anstrahlwinkel $\alpha$ eine Funktion der Wellenlänge $\lambda$, der Gitterkonstanten $g_0$, der benutzten Beugungsordnung $m_0$ und der Brechzahl n der Trägerscheibe ist:

$$\alpha(\lambda) = \arcsin\left(\frac{m_0 \cdot \lambda}{n \cdot g_0}\right)$$

Die Gitterkonstante $g_0$ und die Brechzahl n sind dabei als konstant vorgegeben. Damit ergibt sich für die Differenz der notwendigen Anstrahlwinkel $\Delta\alpha$ für die Beleuchtung mit zwei unterschiedlichen Farben die Winkeldifferenz

$$\Delta\alpha(\lambda_1, \lambda_2) = \alpha(\lambda_1) - \alpha(\lambda_2) = \arcsin\left(\frac{m_0 \cdot \lambda_1}{n \cdot g_0}\right) - \arcsin\left(\frac{m_0 \cdot \lambda_2}{n \cdot g_0}\right)$$

Erfindungsgemäß wird zusätzlich zu einer ersten Beleuchtung mit der Wellenlänge $\lambda_0$ eine zweite Beleuchtung mit der Wellenlänge $\lambda_1$ vorgesehen, indem eine LED mit der Wellenlänge $\lambda_1$ auf der Seite der Trägerscheibe 1 senkrecht zur Gitterstruktur 14 angeordnet wird, die der LED mit der Wellenlänge $\lambda_0$ gegenüber liegt. Über eine entsprechend angepasste Einkoppel- und Abbildungsvorrichtung unter Nutzung der - $m_0$-ten Beugungsordnung wird die Beugungsstruktur unter dem Winkel

$$\alpha(\lambda_1) = \arcsin\left(\frac{-m_0 \cdot \lambda_1}{n \cdot g_0}\right) \cdot$$

angestrahlt. Dadurch ist gewährleistet, dass für beide Abstrahlwinkel gilt:

$$\alpha'(\lambda_0) = \alpha'(\lambda_1) = 0$$

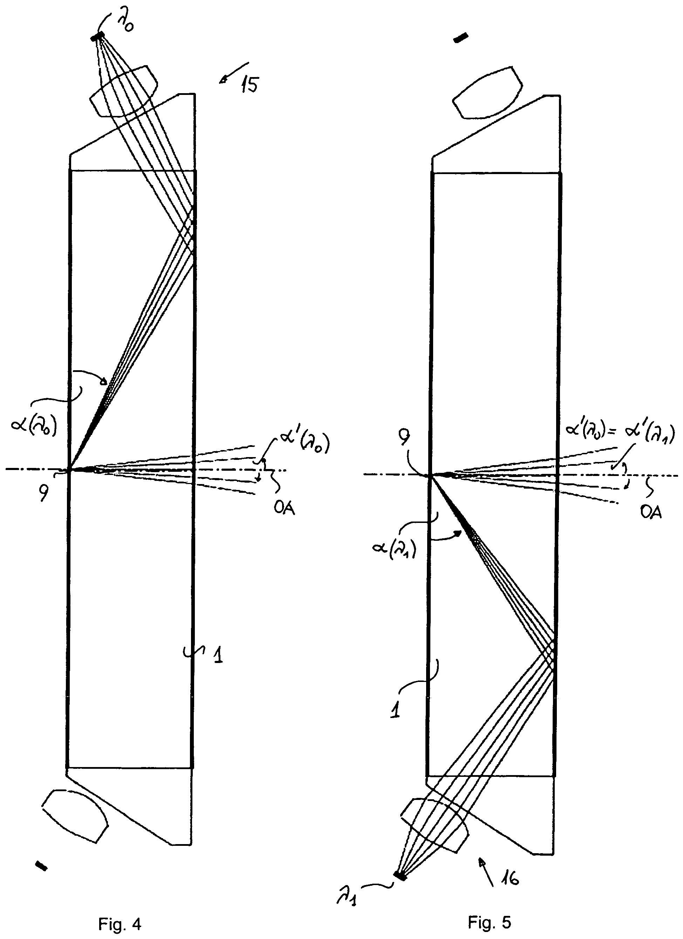

In Fig. 4 und Fig. 5 sind die unterschiedlichen Werte der Anstrahlwinkel $\alpha(\lambda_0)$ und $\alpha(\lambda_1)$ an den unterschiedlichen Abständen der Auftreffstellen Beleuchtungsstrahlenbündel vom Randbereich der Trägerscheibe zu erkennen.

Wenn die Differenz der Wellenlängen und damit die Differenz der notwendigen Einstrahlwinkel groß genug ist, dann können auf einer Randseite der Trägerscheibe auch zwei Einkoppelvorrichtungen hintereinander angebracht werden. Zusammen mit der auf der gegenüber liegenden Seite eingekoppelten Beleuchtung kann die Gitterstruktur dann auch mit mehr als zwei Farben beleuchtet werden.

Bei der Anordnung der Beleuchtungsvorrichtungen für unterschiedliche Wellenlängen können zur Erzeugung der benötigten unterschiedlichen Anstrahlwinkel auch verschiedene Anzahlen von Totalreflektionen in der Trägerscheibe genutzt werden.

Für eine kontinuierliche Änderung der Farben und damit der Wellenlängen, die eine LED ausstrahlt, kann eine Vorrichtung vorgesehen sein, bei der die LED und die zugehörigen optischen Elemente so gedreht werden, dass der Anstrahlwinkel $\alpha$ der vorbeschriebenen funktionalen Abhängigkeit genügt, wobei die Abbildung der LED auf die Gitterstruktur erhalten bleibt. Die LED kann dabei mit der Kollimationslinse über eine mechanische Kurve bewegt werden in Verbindung mit einem Einkoppelprisma mit variablem Winkel, wie es aus bildstabilisierenden optischen Geräten bekannt ist.

## Bezugszeichenliste

| | |
|---|---|
| 1 | Trägerscheibe |
| 2 | Einkoppelprisma |
| 3 | LED |
| 4/5 | elektrische Kontakte |
| 6 | Halbleiterkörper |
| 7 | Abdeckung |
| 8 | Strahlungskegel |
| 9 | Flächenbereich für Markierung |
| 10 | Kollimationsoptik |
| 11 | Beleuchtungsstrahlenbündel |
| 12 | gebeugtes Strahlenbündel |
| 13 | Keil |
| 14 | Gitterstruktur |
| 15/16 | Einkoppelelemente |
| $g_0$ | Gitterkonstante |
| OA | optische Achse |
| $\alpha$ | Anstrahlwinkel |
| $\alpha$' | Abstrahlwinkel |
| $\lambda_0/\lambda_1$ | Wellenlängen der LED |

## Patentansprüche

1. Vorrichtung zur Erzeugung einer Zielmarke mit einer ebenen transparenten Trägerscheibe, deren Höhe eine zylindrische Seitenrandfläche bildet, wobei auf der Trägerscheibe eine als Beugungsstruktur ausgebildete Markierung aufgebracht ist und über die Seitenrandfläche Beleuchtungsstrahlen einer Beleuchtungseinrichtung so in die Trägerscheibe eingeleitet werden, dass sie nach Beugung an der Markierung senkrecht zur Ebene der Trägerscheibe abgestrahlt werden, wobei

als Lichtquelle zur Ausleuchtung der beugenden Markierung eine schmalbandige Leuchtdiode LED (3) mit vorgeschalteter Kollimationsoptik (10) zur Erzeugung eines symmetrischen und homogenen Lichtstrahlenbündels aus dem Strahlungskegel (8) der LED (3) vorgesehen ist, wobei die optische Achse der Kollimationsoptik (10) senkrecht zur Lichteintrittsfläche eines auf die Seitenrandfläche der Trägerscheibe (1) aufgekitteten Einkoppelprismas (2) oder einer an die Seitenrandfläche angeschliffenen schrägen Fläche ausgerichtet ist, wobei die bildseitige Brennweite der Kollimationsoptik (10) so gewählt ist, dass die Leuchtfläche der LED (3) in den Flächenbereich (9) der Markierung abgebildet wird.

**2.** Vorrichtung nach Anspruch 1, **dadurch gekennzeichnet, dass** die Kollimationsoptik aus asphärischen oder anamorphotischen Linsen, einer GRIN-Linse oder einem DOE besteht.

**3.** Vorrichtung nach Anspruch 1, **dadurch gekennzeichnet, dass** als Einkoppelprisma (2) ein Rechteckprisma vorgesehen ist, dessen Basisfläche als Lichteintrittsfläche genutzt ist und das mit einer Kathetenfläche auf die Seitenrandfläche gekittet ist.

**4.** Vorrichtung nach Anspruch 1, **dadurch gekennzeichnet, dass** als Einkoppelprisma (2) ein Rechteckprisma vorgesehen ist, dessen eine Kathetenfläche auf die Seitenrandfläche aufgekittet ist, dessen andere Kathetenfläche als Lichteintrittsfläche genutzt ist und dessen Basisfläche als Reflexionsfläche genutzt ist.

**5.** Vorrichtung nach Anspruch 4, **dadurch gekennzeichnet, dass** die Neigung der Reflexionsfläche zur Lichteintrittsfläche und die bildseitige Brennweite der Kollimationsoptik (10) so gewählt sind, dass die Beleuchtungsstrahlen nach ein- oder mehrmaliger innerer Reflexion an den inneren Flächen der Trägerscheibe (1) die Markierung (14) unter einem Anstrahlwinkel $\alpha$ beleuchten, aus dem sich die Abstrahlrichtung der beugenden Markierung (14) senkrecht zur Ebene der Trägerscheibe (1) ergibt.

**6.** Vorrichtung nach einem der vorhergehenden Ansprüche, **dadurch gekennzeichnet, dass** die Kollimationsoptik (10) mit der Lichteintrittsfläche des Einkoppelprismas (2) oder der an die Seitenrandfläche angeschliffenen schrägen Fläche verkittet ist.

**7.** Vorrichtung nach Anspruch 6, **dadurch gekennzeichnet, dass** die LED mit der Kollimationsoptik (10) verkittet ist.

**8.** Vorrichtung nach einem der vorhergehenden Ansprüche, **dadurch gekennzeichnet, dass** diametral zu einem ersten Einkoppelelement (15) oder einer ersten schrägen Fläche ein zweites Einkoppelelement (16) an die Seitenrandfläche angekittet oder eine zweite schräge Fläche angeschliffen ist, wobei dem zweiten Einkoppelelement (16) oder der zweiten schrägen Fläche eine zweite schmalbandige Leuchtdiode mit einer von der ersten Leuchtdiode abweichenden Wellenlänge und einer an diese Leuchtdiode angepasste Kollimationsoptik vorgesehen sind und die Winkel des Rechteckprismas oder der schrägen Fläche so angepasst sind, dass die Beleuchtungsstrahlen der zweiten Lichtquelle die Markierung (14) unter einem Anstrahlwinkel $\alpha_2$ beleuchten, aus dem sich die Abstrahlrichtung der beugenden Markierung (14) senkrecht zur Ebene der Trägerscheibe (1) ergibt.

**Claims**

**1.** Apparatus for producing a target mark with a planar transparent carrier plate, the height of which forms a cylindrical lateral peripheral surface, wherein a marking, which is embodied as a diffraction structure, is provided on the carrier plate and illumination rays from an illumination device are introduced into the carrier plate via the lateral peripheral surface such that, after diffraction at the marking, they are emitted perpendicular to the plane of the carrier plate, wherein a narrowband light-emitting diode LED (3) with a collimation optical unit (10), which is connected upstream, for producing a symmetric and homogeneous beam of light rays from the radiation cone (8) of the LED (3) is provided as the light source for lighting the diffractive marking, wherein the optical axis of the collimation optical unit (10) is oriented perpendicularly to the light-entrance surface of an input coupling prism (2) which is cemented onto the lateral peripheral surface of the carrier plate (1) or to an inclined surface which is produced on the lateral peripheral surface by grinding, wherein the image-side focal length of the collimation optical unit (10) is selected such that the light-emitting surface of the LED (3) is imaged into the surface region (9) of the marking.

**2.** Apparatus according to Claim 1, **characterized in that** the collimation optical unit consists of aspheric or anamorphic lenses, a GRIN lens or a DOE.

**3.** Apparatus according to Claim 1, **characterized in that** a right-angle prism is provided as the input coupling prism (2), the base of which is used as the light-entrance surface and which is cemented onto the lateral peripheral surface by way of one leg.

**4.** Apparatus according to Claim 1, **characterized in that** a right-angle prism is provided as the input coupling prism (2), with one leg thereof being cemented onto the lateral peripheral surface, the other leg thereof being used as the light-entrance surface, and the base thereof being used as the reflection surface.

**5.** Apparatus according to Claim 4, **characterized in that** the inclination of the reflection surface with respect to the light-entrance surface and the image-side focal length of the collimation optical unit (10) are selected such that, after a single or multiple internal reflections at the inner surfaces of the carrier plate (1), the illumination rays illuminate the marking (14) at an incidence angle $\alpha$, which determines the direction of radiation of the diffractive marking (14) perpendicular to the plane of the carrier plate (1).

**6.** Apparatus according to one of the preceding claims, **characterized in that** the collimation optical unit (10) is cemented to the light-entrance surface of the input coupling prism (2) or to the inclined surface which is produced on the lateral peripheral surface by grinding.

**7.** Apparatus according to Claim 6, **characterized in that** the LED is cemented to the collimation optical unit (10) .

**8.** Apparatus according to one of the preceding claims, **characterized in that**, diametrically to a first input coupling element (15) or a first inclined surface, a second input coupling element (16) is cemented onto the lateral peripheral surface or a second inclined surface is ground, wherein a second narrowband light emitting diode with a wavelength that deviates from the first light-emitting diode and a collimation optical unit, which is adapted to said light-emitting diode, are provided on the second input coupling element (16) or the second inclined surface, and the angles of the right-angle prism or of the inclined surface are adapted such that the illumination rays from the second light source illuminate the marking (14) at an incidence angle $\alpha_2$, which determines the direction of radiation of the diffractive marking (14) perpendicular to the plane of the carrier plate (1).

**Revendications**

**1.** Dispositif pour produire un repère de visée comportant une plaque de support transparente plane, dont la hauteur forme une surface de bord latérale cylindrique, dans lequel un marquage réalisé sous la forme d'une structure de diffraction est déposé sur la plaque de support et des rayons d'éclairage d'un dispositif d'éclairage sont projetés dans la plaque de support à travers la surface de bord latérale de telle sorte qu'après diffraction sur le marquage, ils sont rayonnés perpendiculairement au plan due la plaque de support, dans lequel il est prévu comme source lumineuse une diode électroluminescente LED à bande étroite (3) précédée d'une optique de collimation (10) pour éclairer le marquage diffractant afin de générer un faisceau lumineux symétrique et homogène à partir du cône de rayonnement (8) de la LED (3), dans lequel l'axe optique de l'optique de collimation (10) est orienté perpendiculairement à la surface d'entrée de lumière d'un prisme de couplage (2) collé sur la surface de bord latérale de la plaque de support (1) ou est orienté vers une surface oblique meulée sur la surface de bord latérale, dans lequel la longueur focale de la lentille de collimation (10) côté image est sélectionnée de telle sorte que l'image de la surface éclairée de la LED (3) est formée dans la zone de surface (9) du marquage.

**2.** Dispositif selon la revendication 1, **caractérisé en ce que** l'optique de collimation est constituée de lentilles asphériques ou anamorphiques, d'une lentille GRIN ou d'un DOE.

**3.** Dispositif selon la revendication 1, **caractérisé en ce qu'**il est prévu comme prisme de couplage (2) un prisme rectangulaire dont la surface de base est utilisée comme surface d'entrée de lumière et qui est collé sur la surface de bord latérale par une surface de côté d'angle droit.

**4.** Dispositif selon la revendication 1, **caractérisé en ce qu'**il est prévu comme prisme de couplage (2) un prisme rectangulaire dont une surface de côté d'angle droit est collée sur la surface de bord latérale, dont l'autre surface de côté d'angle droit est utilisée comme surface d'entrée de lumière et dont la surface de base est utilisée comme surface de réflexion.

**5.** Dispositif selon la revendication 4, **caractérisé en ce que** l'inclinaison de la surface de réflexion vers la surface d'entrée de lumière et la longueur focale de l'optique de collimation (10) du côté image sont sélectionnées de telle sorte que les rayons d'éclairage éclairent le marquage (14) après une ou plusieurs réflexions internes sur les surfaces internes de la plaque de support (1) selon un angle d'incidence $\alpha$ tel que la direction de rayonnement du marquage diffractant (14) est perpendiculaire au plan de la plaque de support (1).

6. Dispositif selon l'une des revendications précédentes, **caractérisé en ce que** l'optique de collimation (10) est collée à la surface d'entrée de lumière du prisme de couplage (2) ou à la surface oblique meulée sur la surface de bord latérale.

7. Dispositif selon la revendication 6, **caractérisé en ce que** la LED est collée à l'optique de collimation (10).

8. Dispositif selon l'une des revendications précédentes, **caractérisé en ce que**, diamétralement par rapport à un premier élément de couplage (15) ou à une première surface oblique, un second élément de couplage (16) est collé à la surface de bord latérale ou une seconde surface oblique est meulée, dans lequel il est prévu sur le second élément de couplage (16) ou la seconde surface oblique, une seconde diode électroluminescente à bande étroite ayant une longueur d'onde différente de celle de la première diode électroluminescente et une optique de collimation adaptée à cette diode électroluminescente, et dans lequel les angles du prisme rectangulaire ou de la surface oblique sont adaptés de telle sorte que les rayons d'éclairage de la seconde source lumineuse éclairent le marquage (14) sous un angle d'éclairage $\alpha_2$ tel que la direction de rayonnement du marquage diffractant (14) est perpendiculaire au plan de la plaque de support (1).

EP 2 548 073 B1

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0886163 B1
- EP 1653271 B1
- DE 102007037389 A1